# DEMANDE DE BREVET EUROPEEN

(11) **EP 1 964 724 A1**
(43) Date de publication de la demande: **03.09.2008**
(21) Numéro de dépôt: 08300014.1
(22) Date de dépôt: 09.01.2008
(51) Int. Cl.: B60R 13/10, F16B 21/00

(54) **Dispositif de fixation d'une plaque d'immatriculation sur une paroi d'un véhicule, et véhicule pourvu d'un tel dispositif**

(30) Priorité: 30.01.2007 FR 0700607
(71) Demandeur: Renault SAS, 92100 Boulogne Billancourt (FR)
(72) Inventeur: Lecchi, Philippe, 78400, CHATOU (FR); Pimort, Isabelle, 78180, MONTIGNY LE BRETONNEUX (FR)

(57) **Abrégé**

Le dispositif comporte un organe intérieur adapté pour venir en butée du côté de la face intérieure (13) de la dite paroi et un organe extérieur adapté pour venir en butée contre la plaque, l'organe extérieur et l'organe intérieur étant par ailleurs agencés pour être assemblés par vissage l'un dans l'autre, en passant par des trous (14, 21) sensiblement coaxiaux aménagés respectivement dans la paroi et dans la plaque. L'organe intérieur (3, 130, 230, 330, 430) est maintenu sur la paroi (1) de manière imperdable par une liaison permettant une libre rotation par rapport à ladite paroi et comporte une empreinte (31, 131) d'entraînement en rotation de petite dimension, et un orifice d'accès (12) est ménagé dans un revêtement intérieur (11) de la paroi en face des dits trous (14, 21) pour permettre le passage d'un outil (9) adapté à coopérer avec la dite empreinte, pour immobilier l'organe intérieur en rotation lors du montage ou démontage de la plaque.

## Description

La présente invention concerne un dispositif de fixation d'une plaque d'immatriculation sur une paroi d'un véhicule, et un véhicule pourvu d'un tel dispositif.

Pour fixer une plaque d'immatriculation sur un véhicule, par exemple sur la porte du coffre, on utilise généralement des rivets, de type « rivets pop » posés sans qu'il soit besoin d'ouvrir la porte du coffre ou d'accéder à l'arrière de la paroi sur laquelle la plaque est fixée. Cette fixation est rapide et rend impossible le vol de la plaque sans l'aide d'outils. Par contre, lorsqu'il est nécessaire de changer cette plaque, lors d'un changement d'immatriculation ou du remplacement d'une plaque provisoire par une plaque définitive, il faut une perceuse pour retirer la plaque en place en perçant au niveau du rivet. Il n'est pas toujours possible alors d'empêcher le rivet de tourner, notamment lorsque le sertissage du rivet ne lui a pas donné assez de tension et donc de frottement pour le bloquer en rotation. De plus, le perçage du rivet conduit systématiquement à ce qu'une partie du rivet reste dans le caisson de la porte du coffre, occasionnant des bruits lors de sa manipulation ou même risquant de venir se coincer dans le mécanisme de serrure.

On connaît déjà des systèmes utilisant des vis et écrous en matière plastique, qui tournent librement après mise en place et empêche donc tout démontage trop facile de la plaque susceptible d'en faciliter le vol. En contrepartie il est nécessaire de pouvoir accéder à l'intérieur du caisson de porte pour maintenir l'écrou lors du montage de la plaque, ce qui conduit à devoir déshabiller au moins partiellement la porte pour permettre cet accès.

On notera incidemment que divers systèmes de fixation de plaque d'immatriculation sont déjà connus notamment par les documents FR-2773126, Fr-2783779, US-203/0000043, mais tous ces systèmes sont essentiellement agencés pour permettre une fixation amovible de la plaque, contrairement à l'objectif de la présente invention.

La présente invention a pour but de résoudre les problèmes évoqués précédemment, et vise à faciliter le montage des plaques d'immatriculation, tout en conservant une inviolabilité correcte en utilisation normale pour empêcher un démontage non autorisé de la plaque, mais en permettant cependant des démontages et remontages ultérieurs dans des conditions particulières.

Avec ces objectifs en vue, l'invention a pour objet un dispositif de fixation d'une plaque d'immatriculation sur une paroi extérieure d'un véhicule pourvue d'un revêtement intérieur, le dispositif comportant un organe intérieur adapté pour venir en butée du côté de la face intérieure de la dite paroi et un organe extérieur adapté pour venir en butée contre la plaque, l'organe extérieur et l'organe intérieur étant par ailleurs agencés pour être assemblés par vissage l'un dans l'autre, en passant par des trous sensiblement coaxiaux aménagés respectivement dans la paroi et dans la plaque, caractérisé en ce que l'organe intérieur est maintenu sur la paroi de manière imperdable par une liaison permettant une libre rotation par rapport à ladite paroi et comporte une empreinte d'entraînement en rotation de petite dimension, et un orifice d'accès est ménagé dans le revêtement interne de la paroi en face des dits trous pour permettre le passage d'un outil adapté à coopérer avec la dite empreinte.

Ainsi, la plaque d'immatriculation peut être montée et démontée aisément dés lors que l'on a accès du côté du revêtement intérieur de la paroi et que l'on a l'outil adéquat pour entraîner ou immobiliser en rotation l'organe intérieur pendant le vissage ou dévissage. Par contre, bien que l'accès à l'organe extérieur reste libre et pourrait permettre de provoquer sa rotation, il ne permet pas de démonter la plaque à lui seul, car alors une rotation de l'organe extérieur entraîne également la rotation correspondante de l'organe intérieur, du fait que le frottement entre les filets mâle et femelle génère un couple de desserrage supérieur à celui pouvant résulter du frottement, direct ou indirect, de l'organe intérieur par rapport à la paroi. Même si, du fait du serrage initial, le frottement de l'organe intérieur par rapport à la paroi autorise un début de dévissage, celui-ci reste limité du fait que ledit frottement est sensiblement annulé dés que la pression de serrage est annulée, et que l'organe intérieur peut alors tourner librement.

De plus, le montage imperdable de l'organe intérieur sur la dite paroi permet de le pré-monter lors de la fabrication et d'assurer ensuite son maintien en position et l'accessibilité requise pour son immobilisation en rotation, et cela sans risque qu'il tombe entre la paroi et son revêtement, et donc sans risque de génération de bruits parasites ni risque de devoir déposer ledit revêtement pour pouvoir effectuer des opérations de montage/démontage de la plaque d'immatriculation.

On notera incidemment que l'organe intérieur peut être une vis et l'organe extérieur un écrou ou, inversement, l'organe intérieur est un écrou et l'organe extérieur une vis. Préférentiellement, au moins l'organe intérieur sera réalisé en matière plastique.

Selon un premier mode particulier de réalisation de l'invention, le dispositif comporte une douille épaulée qui comprend :
- un épaulement de butée contre la face intérieure de la paroi,
- un logement où l'organe intérieur est maintenu mais libre en rotation et
- un tenon qui passe dans les trous de la paroi et de la plaque
et des moyens arrêtoirs sont agencés sur le tenon du côté extérieur de la paroi pour maintenir avec jeu la douille épaulée sur la paroi, temporairement avant la fixation de la plaque.

Selon un deuxième mode particulier de réalisation de l'invention, l'organe intérieur comporte un tenon passant dans les trous de la paroi et de la plaque et des moyens arrêtoirs sont adaptés sur le tenon du côté extérieur de la paroi pour maintenir avec jeu l'organe intérieur sur la paroi, temporairement avant la fixation de la plaque.

Les moyens arrêtoirs peuvent comporter des moyens d'ancrage à déformation élastique, du type de clips à lèvres ou similaire, ou être formés d'un anneau élastique, du type circlips, monté avec jeu dans une gorge du tenon.

Selon un troisième mode particulier de réalisation de l'invention, le dispositif comporte une douille épaulée qui comprend
- un épaulement de butée contre la face extérieure de la paroi,
- un logement où l'organe intérieur est maintenu et
- un corps qui passe dans le trou de la paroi
- des moyens arrêtoirs sont agencés sur le corps pour assurer un verrouillage de la douille du côté intérieur de la paroi après son insertion dans le trou de la dite paroi.

Dans ce dernier mode de réalisation, les moyens arrêtoirs peuvent notamment comporter des moyens de verrouillage du type à baïonnette, c'est à dire pouvant être insérés axialement dans le trou de la paroi, puis verrouillés ensuite par une rotation.

Selon un quatrième mode particulier de réalisation de l'invention, l'organe intérieur est maintenu sur la paroi par insertion dans une cage venant de fabrication avec la paroi.

L'invention a aussi pour objet un véhicule destiné à porter une plaque d'immatriculation fixée sur une paroi dudit véhicule, caractérisé en ce qu'il comporte un organe intérieur tel que défini dans l'un ou l'autre des modes de réalisations mentionnés ci-dessus, et adapté sur la dite paroi.

D'autres caractéristiques et avantages apparaîtront dans la description qui va être faite de plusieurs modes de réalisation de l'invention.

On se reportera aux dessins annexés dans lesquels :
- la figure 1 illustre un premier mode de réalisation de l'invention,
- la figure 2 illustre un deuxième mode de réalisation de l'invention,
- les figures 3 et 4 illustrent une variante de ce deuxième mode de réalisation de l'invention,
- la figure 5 illustre un troisième mode de réalisation de l'invention,
- la figure 6 illustre un quatrième mode de réalisation de l'invention.

Dans les exemples qui suivent, on considérera l'application de l'invention à la fixation d'une plaque d'immatriculation 2 sur la paroi 1 d'une porte de coffre d'un véhicule automobile, cette paroi étant doublée du côté intérieur par un panneau de revêtement 11 de finition, ménageant entre la paroi 1 et le dit panneau de revêtement 11 un espace normalement inaccessible sans démontage du panneau.

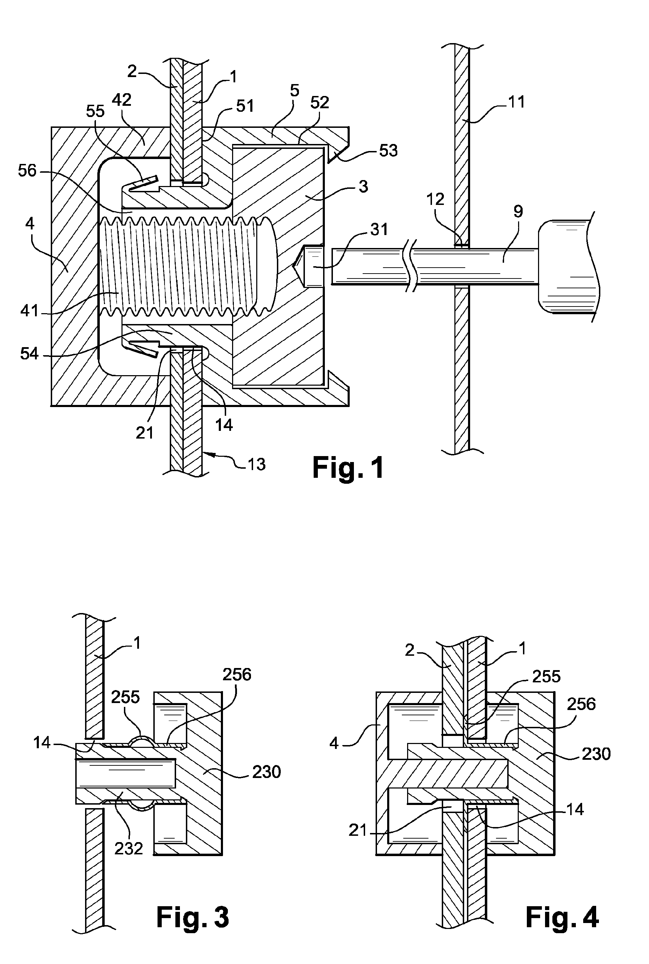

Dans le premier mode de réalisation de l'invention, représenté figure 1, la plaque d'immatriculation 2 est maintenue serrée sur la paroi 1 par au moins deux dispositifs de fixation à vis comprenant chacun un organe intérieur formé ici par un écrou 3 et un organe extérieur constitué par une vis 4 venant en prise par vissage avec l'écrou 3 et enserrant entre eux la plaque 2 pressée contre la paroi 1. L'organe intérieur comporte une empreinte 31 de petite dimension pour un outil tel qu'un tournevis 9 dont la tige peut passer dans un petit orifice 12 réalisé à cet effet dans la plaque de revêtement 11, sensiblement dans l'axe de l'écrou 3.

Dans ce premier mode de réalisation, le dispositif comporte en outre une douille épaulée 5 qui comprend :
- un épaulement 51 venant en butée contre la face intérieure 13 de la paroi 1,
- un logement 52 où l'écrou 3 est maintenu, libre en rotation, par exemple par des crochets 53 déformables élastiquement pour permettre l'insertion de l'écrou dans le logement,
- un tenon 54 qui passe dans un trou 14 de la paroi et un trou 21 correspondant de la plaque 2, et qui comporte un alésage axial 56 de diamètre suffisant pour y passer librement la tige filetée 41 de la vis 4.

Le tenon 54 est pourvu vers son extrémité du côté extérieur de moyens arrêtoirs tels que des moyens d'ancrage à déformation élastique, par exemple des clips à lèvres flexibles 55 agencés sur le tenon du côté extérieur de la paroi, agencés de manière à pouvoir maintenir temporairement la douille épaulée sur la paroi, avant la fixation de la plaque 2.

On notera qu'un jeu diamétral suffisant est prévu entre le tenon et le trou 21 de la plaque, pour faciliter le positionnement relatif de la plaque sur la paroi lors du montage. Les moyens d'ancrage 55 pourront aussi, comme représenté sur la figure 1, être agencés de manière à retenir aussi provisoirement la plaque 2 lors du montage, avant le serrage de la vis 4. La tête de la vis 4 comporte par ailleurs une collerette 42 cylindrique, de dimensions adaptées pour recouvrir la partie débordante du tenon 54 et venir en appui sur la plaque 2 lors du serrage.

La mise en oeuvre du dispositif consistera à pré-monter la douille épaulée 5 avec l'écrou 3 sur la paroi 1 du véhicule lors de la fabrication, avant de fixer le panneau de revêtement 11. La douille et son écrou pourront ainsi rester positionnés et maintenus sur la paroi jusqu'au moment de fixer la plaque d'immatriculation 2. Il suffira à ce moment de positionner la plaque 2, passer l'outil 9 dans le trou 12 du panneau 11 jusqu'à insérer son extrémité dans l'empreinte 31 de l'écrou. On peut ainsi immobiliser l'écrou en rotation au moyen dudit outil et placer et serrer la vis 4, par tout moyen adéquat prévu à cet effet, ou placer la vis 4 et la maintenir en rotation tout en effectuant le serrage par l'outil 9. Dans l'hypothèse où une personne chercherait à démonter la plaque sans avoir accès à l'intérieur du véhicule, en tournant la vis 4, cela conduirait rapidement à libérer la pression de serrage et à ce que l'écrou 3 tourne fou avec la vis, empêchant de poursuivre le dévissage et donc le démontage de la plaque, par contre ce démontage redevient possible dés lors qu'il est possible de bloquer l'écrou 3 en rotation par un outil 9 inséré du côté intérieur. Compte tenu des petites dimensions requises pour passer la tige de l'outil 9, le trou 12 peut être aussi suffisamment petit pour ne pas nuire à l'aspect intérieur de la plaque de revêtement.

On notera que, de manière tout à fait équivalente à ce qui vient d'être décrit, l'organe intérieur pourrait aussi être une vis et l'organe extérieur être un écrou.

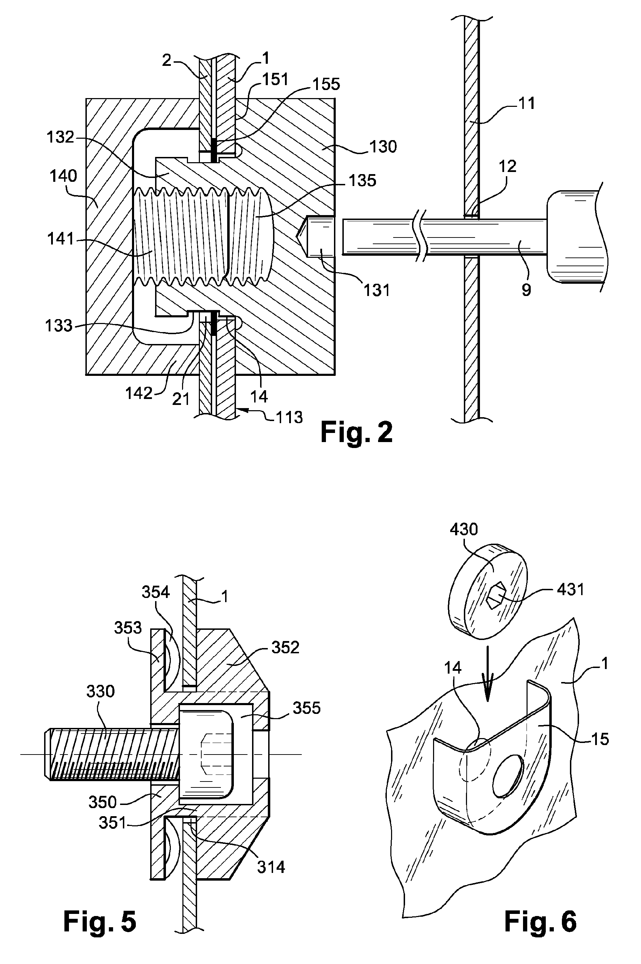

Dans le mode de réalisation de la figure 2, l'organe intérieur est un écrou 130 portant une empreinte 131 pour un tournevis 9. L'écrou 130 est formé d'une seule pièce avec un tenon 132 qui passe dans les trous 14, 21 respectivement de la paroi 1 et de la plaque 2 et qui comporte un trou taraudé 135 pour recevoir la tige filetée 141 de la vis 140. Des moyens arrêtoirs, constitués ici d'un anneau élastique de type circlips 155, sont adaptés sur le tenon du côté extérieur de la paroi, dans une gorge circulaire 133 réalisée sur le tenon 132, pour maintenir l'écrou 130 sur la paroi 1, mais en gardant une liberté de rotation entre l'anneau élastique et l'écrou. La vis 140 comporte aussi une collerette 142 recouvrant l'extrémité du tenon 132.

Lors de la fixation de la plaque 2, le circlips 155 est serré entre la dite plaque et la paroi 1. La gorge 133 et le circlips 155 sont de dimensions telles que, même lorsque le circlips est ainsi immobilisé, d'une part l'épaulement 151 de l'écrou est assuré de pouvoir buter contre la face intérieure 113 de la paroi 1, et d'autre part le circlips n'empêche pas la libre rotation requise de l'écrou.

Les moyens arrêtoirs peuvent aussi être réalisés sous une autre forme qu'un circlips. Ainsi, Les figures 3 et 4 illustrent schématiquement une variante de ce mode de réalisation, dans lequel les moyens arrêtoirs sont formés par des pattes rabattables 255 solidaires d'un anneau 256 clipsé en rotation libre sur l'écrou 230 en matière plastique. Pour la mise en place de l'écrou sur la paroi 1, on rabat les pattes 255 contre le tenon 232 de manière à pouvoir passer l'ensemble dans le trou 14 de la paroi, comme on le voit figure 3. Les pattes 255 sont ensuite redéployées du côté extérieur de la paroi, comme on le voit figure 4, pour maintenir provisoirement l'écrou 230 avant montage de la plaque 2, et sont situées entre ladite plaque et la paroi après montage. Du fait que l'anneau 256 peut tourner par rapport à l'écrou 230, ce dernier n'est pas immobilisé en rotation même lorsque les pattes 255 sont serrées entre la plaque et la paroi.

Dans le cas des variantes de figures 2, et 3 et 4, pour que la plaque 2 puisse être serrée directement contre la paroi 1, sans enserrer les moyens arrêtoirs, il pourrait aussi suffire de réaliser dans la plaque 2 un trou de diamètre plus grand que celui des moyens arrêtoirs.

On notera encore que dans le cas où le tenon fait partie intégrante de l'organe intérieur et traverse simultanément la paroi 1 et la plaque 2, il pourrait éventuellement être possible d'arriver à immobiliser en rotation l'organe intérieur par un effet de cisaillement en forçant un déplacement de la plaque d'immatriculation parallèlement à la paroi jusqu'à buter sur le tenon, et ainsi permettre un dévissage sans nécessiter l'utilisation d'un outil 9. L'utilisation d'une douille telle que notamment celle utilisée dans le premier exemple décrit ci-dessus, avec son tenon 54 traversant simultanément la paroi 1 et la plaque 2, permet d'éviter un tel risque puisque alors l'organe intérieur restera libre de tourner, même après un blocage de la rotation de la douille.

Le troisième mode de réalisation illustrée figure 5 comporte aussi l'utilisation d'une douille intermédiaire 350 qui est dans ce cas montée sur la paroi 1 par le côté extérieur. Le corps 351 de la douille est pourvu d'ailettes 352 ou bossages radiaux ou autres éléments similaires agencés de manière à pouvoir passer axialement dans le trou 341 ménagé dans la paroi avec une forme adaptée à cet effet, et à se verrouiller derrière la paroi par une rotation de la douille, de manière correspondante à un assemblage à baïonnette. La paroi 1 est ainsi enserrée entre les dites ailettes 352 ou bossages et un épaulement formé par une collerette 353, sur laquelle sont préférentiellement formées des bossages 354 déformables élastiquement pour servir de moyens de rattrapage de jeu axial. L'organe intérieur représenté sur la figure est ici une vis 330 dont la tête est placée dans un logement 355 de la douille 350, mais pourrait aussi être un écrou comme dans les variantes précédentes.

Dans le quatrième mode de réalisation, illustré figure 6, l'organe intérieur est un écrou 430 comportant une empreinte 431 qui est placé est maintenu dans une cage 15 venue de moulage avec la paroi 1 réalisée en matière plastique

## Revendications

1. Dispositif de fixation d'une plaque d'immatriculation (2) sur une paroi extérieure (1) d'un véhicule pourvue d'un revêtement intérieur (11), le dispositif comportant un organe intérieur adapté pour venir en butée du côté de la face intérieure (13) de la dite paroi et un organe extérieur adapté pour venir en butée contre la plaque, l'organe extérieur et l'organe intérieur étant par ailleurs agencés pour être assemblés par vissage l'un dans l'autre, en passant par des trous (14, 21) sensiblement coaxiaux aménagés respectivement dans la paroi et dans la plaque,
**caractérisé en ce que** l'organe intérieur (3, 130, 230, 330, 430) est maintenu sur la paroi (1) de manière imperdable par une liaison permettant une libre rotation par rapport à ladite paroi et comporte une empreinte (31, 131) d'entraînement en rotation de petite dimension, et un orifice d'accès (12) est ménagé dans le revêtement intérieur (11) de la paroi en face des dits trous (14, 21) pour permettre le passage d'un outil (9) adapté à coopérer avec la dite empreinte.

2. Dispositif selon la revendication 1, **caractérisé en ce qu'**il comporte une douille épaulée (5) qui comprend
- un épaulement (51) de butée contre la face intérieure (13) de la paroi (1),
- un logement (52) où l'organe intérieur (3) est maintenu et
- un tenon (54) qui passe dans les trous (14, 21) de la paroi et de la plaque
et des moyens arrêtoirs (55) sont agencés sur le tenon du côté extérieur de la paroi pour maintenir avec jeu la douille épaulée sur la paroi, temporairement avant la fixation de la plaque.

3. Dispositif selon la revendication 1, **caractérisé en ce que** l'organe intérieur (130, 230) comporte un tenon (132, 232) passant dans les trous (14, 21) de la paroi et de la plaque et des moyens arrêtoirs (155, 255) sont adaptés sur le tenon du côté extérieur de la paroi pour maintenir avec jeu l'organe intérieur sur la paroi, temporairement avant la fixation de la plaque.

4. Dispositif selon la revendication 2 ou 3, **caractérisé en ce que** les moyens arrêtoirs comporte des moyens d'ancrage (55, 255) à déformation élastique.

5. Dispositif selon la revendication 2 ou 3, **caractérisé en ce que** les moyens arrêtoirs comportent un anneau (155) monté avec jeu dans une gorge (133) du tenon.

6. Dispositif selon la revendication 1, **caractérisé en ce qu'**il comporte une douille épaulée (350) qui comprend
- un épaulement (353) de butée contre la face extérieure de la paroi (1),
- un logement (355) où l'organe intérieur (330) est maintenu et
- un corps (351) qui passe dans le trou (314) de la paroi (1)
- des moyens arrêtoirs (352) sont agencés sur le corps pour assurer un verrouillage de la douille du côté intérieur de la paroi après son insertion dans le trou de la dite paroi.

7. Dispositif selon la revendication 6, **caractérisé en ce que** les moyens arrêtoirs comportent des moyens de verrouillage (352) du type à baïonnette.

8. Dispositif selon la revendication 1, **caractérisé en ce que** l'organe intérieur (430) est maintenu sur la paroi (1) par insertion dans une cage (15) formée d'une pièce avec la paroi.

9. Dispositif selon l'une quelconque des revendications 1 à 8, **caractérisé en ce que** l'organe intérieur est une vis (330) et l'organe extérieur un écrou.

10. Dispositif selon l'une quelconque des revendications 1 à 8, **caractérisé en ce que** l'organe extérieur est une vis (4, 140) et l'organe intérieur un écrou (3, 130, 230, 430).

11. Véhicule destiné à porter une plaque d'immatriculation (2) fixée sur une paroi (1) dudit véhicule **caractérisé en ce qu'**il comporte un organe intérieur tel que défini dans l'une quelconque des revendications précédentes, adapté sur la dite paroi.
